# EUROPÄISCHE PATENTSCHRIFT

(11) **EP 2 147 823 B1**
(45) Veröffentlichungstag und Bekanntmachung des Hinweises auf die Patenterteilung: **05.09.2012**
(21) Anmeldenummer: 09166129.8
(22) Anmeldetag: 22.07.2009
(51) Int. Cl.: B60Q 1/14

(54) **Verfahren und Vorrichtung zum Ermitteln einer geeigneten Lichtverteilung des durch mindestens einen Frontscheinwerfer eines Fahrzeugs abgestrahlten Lichts**
Method and device for determining a suitable light distribution of the light emitted by at least one headlamp of a vehicle
Procédé et dispositif de détermination d'une répartition de lumière rayonnée par au moins un phare de véhicule

(30) Priorität: 22.07.2008 DE 102008034166
(43) Veröffentlichungstag der Anmeldung: 27.01.2010
(73) Patentinhaber: Hella KGaA Hueck & Co., 59552 Lippstadt (DE)
(72) Erfinder: Hoffmann, Ingo, 10437, Berlin (DE); Schmidt, Christian, 33106, Paderborn (DE)
(74) Vertreter: Schaumburg, Thoenes, Thurn, Landskron, Eckert

(56) Entgegenhaltungen:
- EP-A- 1 923 262
- EP-A- 1 964 717
- WO-A-2008/037388
- US-A- 5 645 338
- US-A1- 2004 052 083

## Beschreibung

Die Erfindung betrifft ein Verfahren und eine Vorrichtung zum Ermitteln einer Lichtverteilung des durch mindestens einen Frontscheinwerfer eines Fahrzeugs abgestrahlten Lichts. Bei modernen Frontscheinwerfern ist es möglich, neben den bekannten Lichtverteilungen für Abblendlicht und Fernlicht zusätzliche an eine Verkehrssituation angepasste Lichtverteilungen zu erzeugen. Dadurch wird erreicht, dass auch Zwischenstufen der Lichtverteilung zwischen Abblendlicht und Fernlicht einstellbar sind, um den Bereich vor dem Fahrzeug optimal auszuleuchten. Dabei ist jedoch zu beachten, dass weder der vorausfahrende Verkehr noch der entgegenkommende Verkehr durch das abgestrahlte Licht behindert werden dürfen.

Bei bekannten Lichtsteuervorgängen in Kraftfahrzeugen, insbesondere bei der Verwendung von einem Lichtassistenzsystem, werden nur bestimmte Parameter der Lichtverteilung beeinflusst. Insbesondere kann das Fernlicht an bzw. ausgeschaltet werden, ein gedimmtes Zuschalten des Fernlichts veranlasst werden oder mit Hilfe einer variablen Blende die obere Kante der Lichtverteilung bzw. einer durch das abgestrahlte Licht der Scheinwerfer erzeugte Hell-Dunkel-Grenze verändert werden. Dabei wird die konkret durch die Frontscheinwerfer erzeugte Lichtverteilung und der durch die Lichtverteilung erzeugte Verlauf der Hell-Dunkel-Grenze nicht berücksichtigt, sodass eine Lichtverteilung gewählt werden muss, die andere Verkehrsteilnehmer sicher nicht behindert jedoch eine geringere Ausleuchtung des Bereichs vor dem Fahrzeug bewirkt, als bei der konkreten Lage der anderen Verkehrsteilnehmer zur Hell-Dunkel-Grenze möglich wäre. Somit ist im Stand der Technik eine situationsadäquate Lichtsteuerung nicht für alle Verkehrssituationen möglich. Insbesondere wird die Ausleuchtung des Bereichs vor dem Fahrzeug oft unnötig stark eingeschränkt bzw. reduziert, um eine Gefährdung anderer Verkehrsteilnehmer mit den im Stand der Technik zur Verfügung stehenden Informationen sicher auszuschließen.

Aus dem Dokument DE 198 22 124 C2 ist eine Vorrichtung zum Erzeugen eines vor einem Kraftfahrzeug auf die Fahrbahn auftreffenden Lichtbündels bekannt. Dabei wird eine Umlenkeinrichtung zur Veränderung der Lichtstärkeverteilung innerhalb des Lichtbündels genutzt. Eine Sensoreinrichtung erfasst die Lichtverhältnisse vor dem Fahrzeug. Abhängig von den erfassten Lichtverhältnissen wird die Lichtverteilung innerhalb des Lichtbündels gesteuert.

Aus dem Dokument EP 0 121 457 B1 ist ein Verfahren zur Schätzung der Beleuchtungsqualität von Fahrzeugscheinwerfern bekannt. Dabei wird die Beleuchtungsverteilung des von einem Scheinwerfer abgestrahlten Lichts auf einer Leinwand oder die Lichtstärkeverteilung in einem Raumwinkel des abgegebenen Lichtstrahls gemessen.

Aus dem Dokument US 7,195,379 B2 wird die Abstrahlcharakteristik eines Scheinwerfers eines Fahrzeugs durch eine Pixelblende geändert.

Aus dem Dokument US 7,156,542 B2 ist ein Frontscheinwerfer für ein Fahrzeug bekannt, bei dem das von einer Lichtquelle erzeugte Licht mit Hilfe einer Digital ansteuerbaren Optik verändert werden kann, um eine Vielzahl von Beleuchtungsmustern zu erzeugen.

Aus dem Dokument US 5,645,338 A ist eine Anordnung zur Steuerung der Lichtverteilung eines Frontscheinwerfers bekannt. Dabei ist eine rotierende Blende vorgesehen, um die Lichtverteilung zu steuern.

Aufgabe der Erfindung ist es, ein Verfahren und eine Vorrichtung zur Auswahl einer geeigneten Lichtverteilung des durch mindestens einen Frontscheinwerfer eines Fahrzeugs abgestrahlten Lichts anzugeben, bei denen der Bereich vor dem Fahrzeug mit Hilfe des Frontscheinwerfers möglichst weiträumig ausgeleuchtet wird.

Diese Aufgabe wird durch ein Verfahren zur Auswahl einer geeigneten Lichtverteilung des durch mindestens einen Frontscheinwerfer eines Fahrzeugs abgestrahlten Lichts mit den Merkmalen des Patentanspruchs 1 sowie durch eine Vorrichtung mit den Merkmalen des nebengeordneten Vorrichtungsanspruchs gelöst. Vorteilhafte Weiterbildungen sind in den abhängigen Patentansprüchen angegeben.

Durch eine Berücksichtigung eines zumindest zweidimensionalen Verlaufs einer Blendungsgrenze für verschiedenen einstellbare Lichtverteilungen sowie der Position mindestens eines bei der Lichtverteilung des von dem mindestens einen Frontscheinwerfer abgestrahlten Lichts zu berücksichtigenden Objekts kann eine optimierte an die Situation angepasste Lichtabgabe durch das Fahrzeug erreicht werden, ohne unzulässig viel Licht auf das bei der Lichtabgabe zu berücksichtigende Objekt abzustrahlen. Ein solches bei der Lichtverteilung des von dem Frontscheinwerfer abgestrahlten Lichts zu berücksichtigenden Objekts kann beispielsweise ein vorausfahrendes oder entgegenkommendes Fahrzeug sein. Auf ein solches Fahrzeug darf nicht unzulässig viel Licht abgegeben werden, da der Fahrzeugführer des betreffenden Fahrzeuges sonst geblendet werden könnte. Dadurch erfolgt eine Gefährdung der Verkehrssicherheit.

Durch das erfindungsgemäße Verfahren und die Vorrichtung kann jedoch der Bereich vor dem Fahrzeug situationsoptimiert beleuchtet werden, sodass eine Lichtverteilung wählbar ist, die eine größtmögliche Ausleuchtung des Bereichs vor dem Fahrzeug ermöglicht und gerade nicht unzulässig viel Licht auf die zu berücksichtigenden Objekte abgibt. Somit erfolgt bei dem erfindungsgemäßen Verfahren und der erfindungsgemäßen Vorrichtung eine Situationserkennung der Verkehrssituation und die Bestimmung einer geeigneten Lichtverteilung, die dann mit Hilfe des mindestens einen Frontscheinwerfers des Fahrzeugs erzeugt wird. Ergibt die Überprüfung, dass die Blendungsgrenze eine zulässige Position zum relevanten Objekt hat, kann die Lichtverteilung zur Ausleuchtung des Bereichs vor dem Fahrzeug genutzt werden. Werden mindestens zwei mögliche Lichtverteilungen ermittelt, deren Blendungsgrenzen jeweils eine zulässige Position zu dem mindestens einen relevanten Objekt haben, wird vorzugsweise die ausgewählt, die den Bereich vor dem Fahrzeug größtmöglich ausleuchtet.

Bei einer Weiterbildung der Erfindung wird die Position des Objekts relativ zur Blendungsgrenze mindestens einer der einstellbaren Lichtverteilungen ermittelt. Dadurch kann relativ einfach ermittelt werden, ob bei einer Einstellung der jeweiligen Lichtverteilung das Objekt im Blendbereich liegt und dadurch unzulässig viel Licht auf das Objekt abgestrahlt wird oder ob das Objekt bei der Einstellung dieser Lichtverteilung außerhalb des Blendbereichs liegt.

Ferner ist es vorteilhaft, den Verlauf der Blendungsgrenzen für die mindestens zwei voneinander verschiedenen einstellbaren Lichtverteilungen in einem Speicherbereich gespeichert sind und aus diesem zum Ermitteln des Verlaufs einer Blendungsgrenze für die zumindest zwei voneinander verschieden einstellbaren Lichtverteilungen des mindestens einen Frontscheinwerfers erforderlichenfalls ausgelesen werden. Dadurch können die Daten zum Ermitteln des Verlaufs der Blendungsgrenze durch gespeicherte Daten hinterlegt und bei Bedarf ausgelesen oder aus gespeicherten Daten von Lichtverteilungen berechnet werden. Somit wird zumindest für ein Teil der möglichen Lichtverteilungen jeweils ein Verlauf einer zu dieser Lichtverteilung zugeordneten Blendungsgrenze bereitgestellt.

Der zweidimensionale Verlauf der Blendungsgrenze kann für mindestens eine Lichtverteilung, vorzugsweise für eine neben einer Abblendlichtverteilung und einer Fernlichtverteilung einstellbare Lichtverteilung, in einer Y-Z-Ebene des Fahrzeugkoordinatensystems des Fahrzeugs ermittelt werden. Die Y-Z-Ebene wird in X-Richtung vor dem Fahrzeug positioniert, vorzugsweise auf Höhe des Objekts. Dadurch kann der Verlauf der Blendungsgrenze und die Position des Objekts einfach überlagert werden und bestimmt werden, ob die Blendungsgrenze die erforderliche Lage, insbesondere einen maximalen oder minimalen erforderlichen Abstand, zum Objekt hat. Weiterhin kann der zweidimensionale Verlauf oder ein weiterer zweidimensionaler Verlauf der Blendungsgrenze in einer X-Z-Ebene des Fahrzeugkoordinatensystems des Fahrzeugs ermittelt werden. Dadurch kann der entfernungsabhängige Verlauf der Blendungsgrenze in X-Richtung ermittelt werden.

Besonders vorteilhaft ist es, einen dreidimensionalen Verlauf der Blendungsgrenze für die mindestens zwei voneinander verschiedenen einstellbaren Lichtverteilungen zu ermitteln. Vorzugsweise wird für jede einstellbare Lichtverteilung eine dreidimensionale Blendungsgrenze ermittelt und zur Lichtsteuerung bereitgestellt, die von der Lichtverteilung für Abblendlicht und der Lichtverteilung für Fernlicht verschieden ist. Dabei sollte eine dreidimensionale Position des Objekts ermittelt werden. Dadurch kann sicher beurteilt werden, ob das Objekt in einem durch die Blendungsgrenze begrenzten Blendbereich liegt oder außerhalb des Blendbereichs.

Besonders vorteilhaft ist es, für jede mit Hilfe des mindestens einen Frontscheinwerfers einstellbare Lichtverteilung einen Verlauf der Blendungsgrenze dieser Lichtverteilung zu ermitteln. Dabei ist es nicht erforderlich, eine Blendungsgrenze für die bei Abblendlicht erzeugte geringste Lichtverteilung zu ermitteln.

Als Blendungsgrenze wird vorzugsweise eine Isoluxlinie, beispielsweise die Isoluxlinie mit dem Wert 0,1 Lux, genutzt. Es ist davon auszugehen, dass bei einer erzeugten Beleuchtungsstärke von kleiner gleich 0,1 Lux keine Blendung und somit keine Beeinträchtigung anderer Verkehrsteilnehmer durch das abgestrahlte Licht erfolgt.

Die Lichtverteilung des durch den Frontscheinwerfer des Fahrzeugs abgestrahlten Lichts kann insbesondere durch eine Änderung der Stellung einer vor einer Lichtquelle angeordneten Blendenwelle, durch das Vorsehen einer verschiebbaren Blende, eines sogenannten Shutters, durch die Aktivierung einer Leuchtweitenregulierung, durch eine Leistungsänderung einer oder mehrerer Lichtquellen und/oder durch das Zu- bzw. Abschalten einer oder mehrerer Lichtquellen geändert werden.

Besonders vorteilhaft ist es, die sich im Bereich vor dem Fahrzeug befindenden Objekte in für die Lichtverteilung relevante und für die Lichtverteilung nicht relevante Objekte zu klassifizieren. Die Objekte, bei denen die Gefahr einer Blendung durch das durch die Frontscheinwerfer des Fahrzeugs abgestrahlte Licht besteht, werden dann als für die Lichtverteilung relevante Objekte klassifiziert. Dabei ist es vorteilhaft, nur die als relevant klassifizierten Objekte bei der Steuerung der Lichtverteilung zu berücksichtigen.

Ferner ist es vorteilhaft, mit Hilfe einer Bilderfassungseinheit mindestens ein Bild mit Abbildungen von in einem Bereich vor dem Fahrzeug vorhandenen Objekten zu erfassen und dem Bild entsprechende Bilddaten zu erzeugen und diese zu verarbeiten. Die sich im Bereich vor dem Fahrzeug befindenden für die Lichtverteilung relevanten Objekte werden beim Verarbeiten der Bilddaten detektiert und klassifiziert. Als Bilderfassungseinheit eignet sich insbesondere eine bekannte Fahrzeugfrontkamera. Die Bilderfassungseinheit kann insbesondere eine monokulare Kamera, mehrere monokulare Kameras, ein Stereokamerasystem oder mehrere Stereokamerasysteme umfassen, wobei die einzelnen Kameras Bilddaten von Graustufenbildern oder Farbbildern erzeugen. Besonders vorteilhaft ist die Verwendung einer Kamera mit mindestens einem CMOS-Bilderfassungssensor, der vorzugsweise Graustufenbilder erzeugt. Beispielsweise hat die Bilderfassungseinheit einen Active-Pixel-Sensor als Bilderfassungssensor.

Ferner ist es vorteilhaft, solche Fahrzeuge als relevante Objekte zu klassifizieren, bei denen die Blendungsgrenze des Blendbereichs auf Höhe einer zulässigen Blendungsgrenze oder oberhalb einer zulässigen Blendungsgrenze auf das zu klassifizierende Fahrzeug trifft. Die zulässige Blendungsgrenze gibt die maximale Höhe an, bis zu der die Blendungsgrenze des Blendbereichs auf das zu klassifizierende Fahrzeug treffen darf, ohne dass der Fahrer des zu klassifizierenden Fahrzeugs durch das durch die Frontscheinwerfer des zweiten Fahrzeugs abgestrahlte Licht geblendet wird. Dadurch muss nur geprüft werden, ob die als relevant klassifizierten Objekte im Blendbereich oder außerhalb des Blendbereichs liegen. Die ermittelte Blendungsgrenze, die einen Blendbereich begrenzt, kann bei einer vorteilhaften Weiterbildung der Erfindung einen gekrümmten Verlauf haben. Jedoch ist diese Blendungsgrenze abhängig von der konkreten Ausbildung des Frontscheinwerfers und von der konkreten vom Frontscheinwerfer erzeugten Lichtverteilung.

Bei einer vorteilhaften Weiterbildung wird geprüft, ob die durch die Frontscheinwerfer des zweiten Fahrzeugs in der Entfernung des relevanten vorausfahrenden Fahrzeugs erzeugte Blendungsgrenze unterhalb der zulässigen Blendungsgrenze des relevanten vorausfahrenden Fahrzeugs liegt. Erforderlichenfalls wird die Lichtverteilung des durch die Frontscheinwerfer des zweiten Fahrzeugs abgestrahlten Lichts geändert, so dass in der Entfernung des relevanten vorausfahrenden Fahrzeugs erzeugte Blendungsgrenze unterhalb der zulässigen Blendungsgrenze des relevanten vorausfahrenden Fahrzeugs liegt.

Die Vorrichtung mit den Merkmalen des nebengeordneten Vorrichtungsanspruchs kann auf die gleiche Weise weitergebildet werden, wie für das erfindungsgemäße Verfahren angegeben. Insbesondere kann auch die Vorrichtung mit den in den abhängigen Patentansprüchen angegebenen Merkmalen oder entsprechenden Vorrichtungsmerkmalen weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:

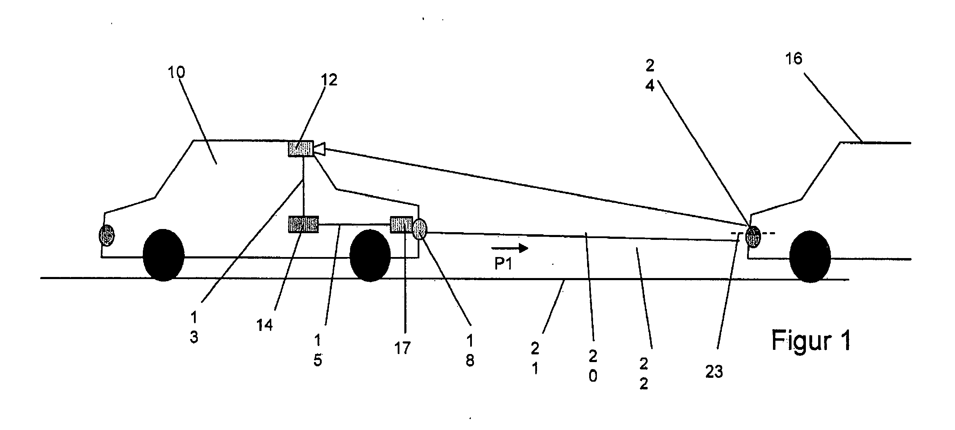

- Figur 1: eine schematische Seitenansicht einer Verkehrssituation mit zwei Fahrzeugen, wobei das hinter dem ersten Fahrzeug fah- rende zweite Fahrzeug ein System zur veränderlichen Ein- stellung der Lichtverteilung hat;

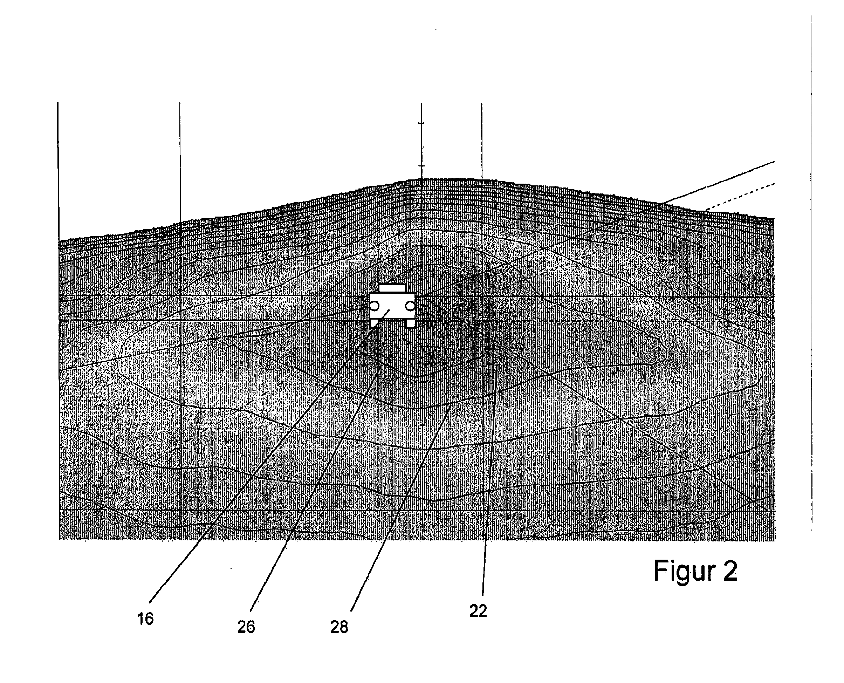

- Figur 2: ein Diagramm mit einer Lichtverteilung des durch die Front- scheinwerfer eines Fahrzeuges abgestrahlten Lichts auf eine in der Entfernung zu einem vorausfahrenden Fahrzeug ange- ordnete senkrechte Ebene bei Fernlicht;

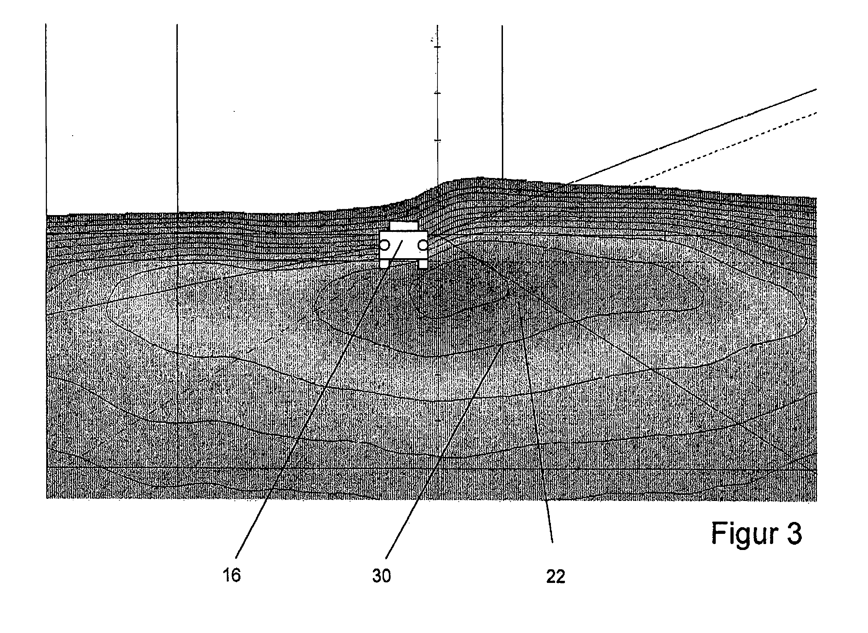

- Figur 3: ein Diagramm mit einer Lichtverteilung des durch die Front- scheinwerfer des Fahrzeuges abgestrahlten Lichts auf eine in der Entfernung zu einem vorausfahrenden Fahrzeug angeord- nete senkrechte Ebene zu einem entgegenkommenden Fahr- zeug bei reduzierter Lichtabstrahlung der Frontscheinwerfer des Fahrzeugs;

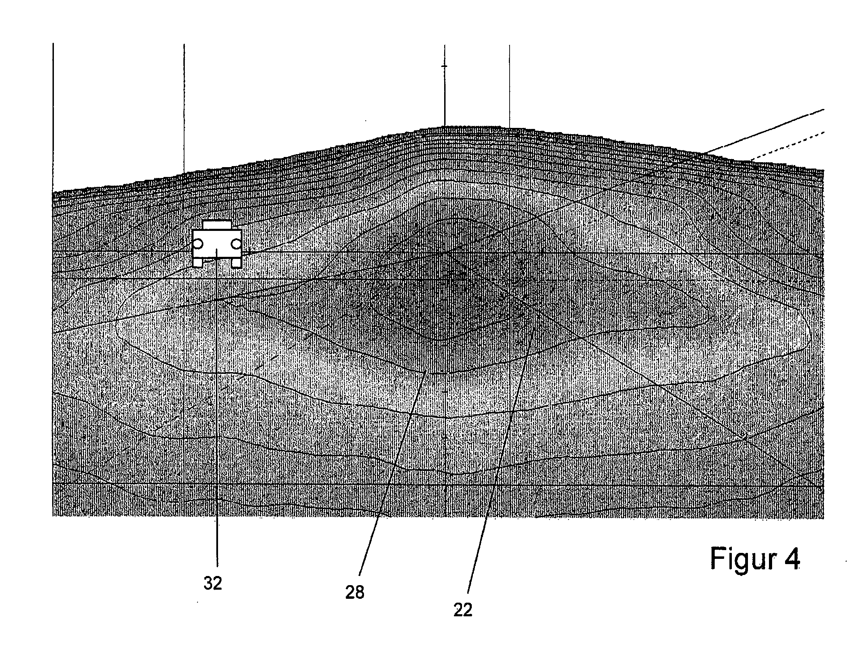

- Figur 4: ein Diagramm mit einer Lichtverteilung des durch die Front- scheinwerfer des Fahrzeuges abgestrahlten Lichts auf eine in der Entfernung zu einem entgegenkommenden Fahrzeug an- geordnete senkrechte Ebene;

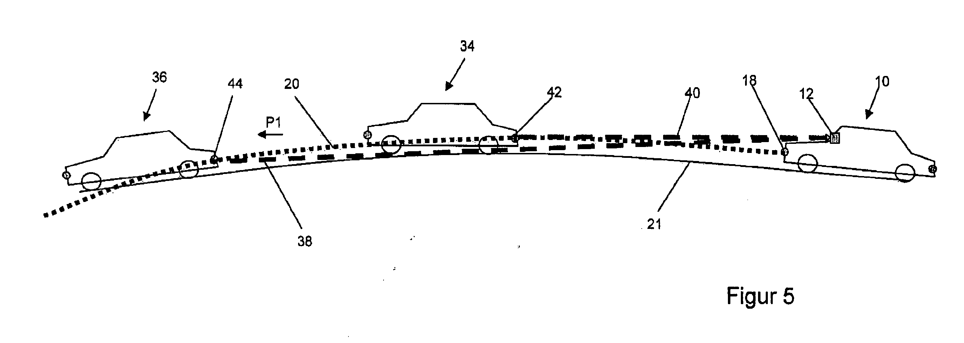

- Figur 5: eine Seitenansicht einer schematisch dargestellten Verkehrs- situation mit drei Fahrzeugen, wobei das an letzter Position fahrende Fahrzeug ein System zur veränderlichen Einstellung der Lichtverteilung hat und wobei die anderen beiden Fahr- zeuge für die Wahl einer blendungsfreien Lichtverteilung des durch die Frontscheinwerfer des an letzter Position fahrenden Fahrzeugs abgestrahlten Lichts gleichermaßen relevant sind;

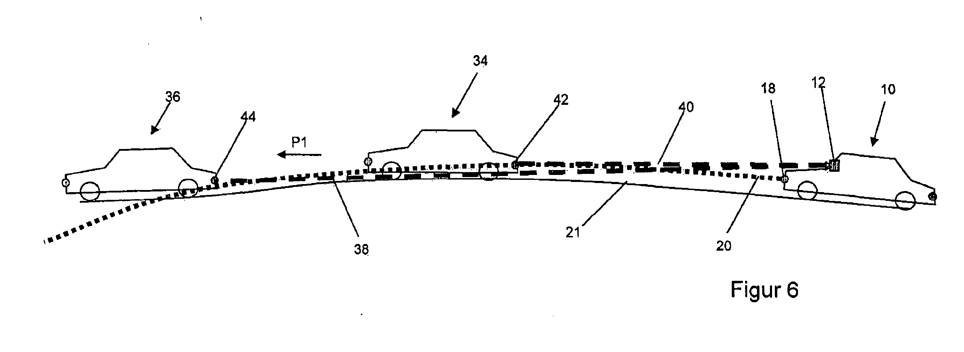

- Figur 6: eine Seitenansicht einer schematisch dargestellten Verkehrs- situation mit drei Fahrzeugen, wobei das an letzter Position fahrende Fahrzeug ein System zur veränderlichen Einstellung der Lichtverteilung hat und wobei das in Fahrtrichtung hinte- re Fahrzeug der anderen beiden Fahrzeug für die Wahl einer blendungsfreien Lichtverteilung des durch die Frontschein- werfer des an letzter Position fahrenden Fahrzeugs abge- strahlten Lichts relevant ist; und

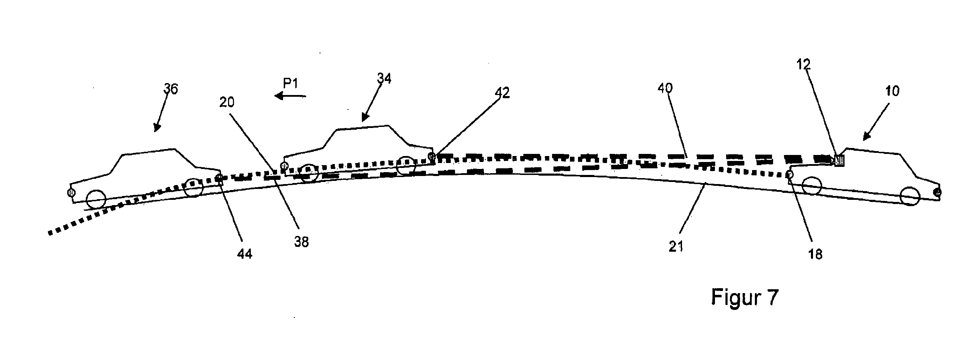

- Figur 7: eine Seitenansicht einer schematisch dargestellten Verkehrs- situation mit drei Fahrzeugen, wobei das an letzter Position fahrende Fahrzeug ein System zur veränderlichen Einstellung der Lichtverteilung hat und wobei das in Fahrtrichtung vor- dere Fahrzeug der anderen beiden Fahrzeuge für die Wahl ei- ner blendungsfreien Lichtverteilung des durch die Front- scheinwerfer des an letzter Position fahrenden Fahrzeugs ab- gestrahlten Lichts relevant ist.

In Figur 1 ist eine schematische Seitenansicht einer Verkehrssituation mit zwei Fahrzeugen dargestellt, wobei das hinter dem ersten Fahrzeug 16 fahrende zweite Fahrzeug 10 ein System zur veränderlichen Einstellung der Lichtverteilung hat. Das zweite Fahrzeug 10 hat dazu eine Frontkamera 12, die Bilddaten von Bildern mit Abbildungen eines Bereichs vor dem Fahrzeug 10 erzeugt. Die Kamera 12 ist über eine Datenleitung 13 mit einer Steuereinheit 14 verbunden. Die von der Kamera 12 erzeugten Bilddaten werden mit Hilfe eines durch die Steuereinheit 14 bereitgestellten Bildverarbeitungsverfahrens verarbeitet, wobei mit Hilfe des Bildverarbeitungsverfahrens relevante Objekte detektiert werden. Solche relevante Objekte sind insbesondere andere Fahrzeuge, deren Fahrzeugführer durch das vom Fahrzeug 10 ausgestrahlte Licht geblendet und somit gefährdet werden könnten. Im Ausführungsbeispiel ist als ein solches relevantes Objekt das auf der gleichen Fahrspur vorausfahrende erste Fahrzeug 16 dargestellt. Weitere relevante Objekte können beispielsweise entgegenkommende Fahrzeuge sein.

Die Steuereinheit 14 ist weiterhin über eine zweite Datenleitung 15 mit den Lichtsteuermodulen 17 verbunden, wobei den Frontscheinwerfern 18 des Fahrzeugs 10 beim Ausführungsbeispiel nach Figur 1 jeweils ein Lichtsteuermodul 17 zugeordnet ist. Im vorliegenden Ausführungsbeispiel gibt die Steuereinheit 14 den Lichtsteuermodulen 17 eine gewünschte Lichtverteilung für den dem jeweiligen Lichtsteuermodul 17 zugeordneten Frontscheinwerfer 18 vor. Die Lichtsteuereinheiten 17 steuern den ihnen zugeordneten Frontscheinwerfer 18 oder die ihnen zugeordneten Frontscheinwerfer derart an, dass das von ihm bzw. von ihnen abgestrahlte Licht der Frontscheinwerfer 18 die gewünschte vorgegebene Lichtverteilung erzeugt. Dazu aktivieren die Lichtsteuereinheiten 17 die erforderlichen Lichtquellen und/oder Aktoren zum Einstellen des Abstrahlwinkels des durch die Frontscheinwerfer 18 abgestrahlten Lichts. Dadurch wird die Lichtabgabe der Frontscheinwerfer 18 des Fahrzeugs 10 so gesteuert, dass der Fahrer des vorausfahrenden Fahrzeugs 16 nicht geblendet wird.

Hierzu werden mit Hilfe eines Bildverarbeitungsprogramms in einem von der Kamera 12 aufgenommen Bild die Rückleuchten 24 des vorausfahrenden Fahrzeugs 16 detektiert und die Position des vorausfahrenden Fahrzeuges 16 ermittelt. Ferner wird die Entfernung zwischen dem Fahrzeug 10 und dem vorausfahrenden Fahrzeug 16 ermittelt. Der durch die Frontscheinwerfer 18 bei einer Lichtabgabe erzeugter Blendbereich 22 wird so weit in Richtung einer Fahrbahn 21 abgesenkt, dass die obere Grenze des Blendbereichs 22 auf Höhe einer zulässigen Blendungsgrenze auf das vorausfahrenden Fahrzeug 16 trifft und somit der Fahrer des vorherfahrenden Fahrzeugs 16 nicht geblendet wird. Die zulässige Blendungsgrenze ist durch die Strichlinie 23 angedeutet. Der Blendbereich 22 gibt denjenigen Bereich an, in dem der Fahrer des vorausfahrenden Fahrzeugs 16 durch das von den Frontscheinwerfern 18 des zweiten Fahrzeugs 10 abgestrahlten Lichts geblendet wird oder geblendet werden kann. Die obere Grenze des Blendbereichs 22 wird auch als horizontale Hell-Dunkel-Grenze oder Blendungsgrenze bezeichnet. Die Blendungsgrenze ist im Ausführungsbeispiel schematisch durch die Linie 20 dargestellt. Als Blendungsgrenze 20 wird im vorliegenden Ausführungsbeispiel die 0,1 Lux Isoluxlinie im Raum definiert, d. h. die dreidimensionale Isolux-Lichtverteilung der Beleuchtungsstärke 0,1 Lux. Bei anderen Ausführungsbeispielen können auch andere Beleuchtungsstärken zum Festlegen der Blendungsgrenze 20 gewählt werden. Die zulässige Blendungsgrenze 23 gibt die maximale Höhe an, in der die Blendungsgrenze 20 auf das vorausfahrende Fahrzeug 16 treffen darf, ohne dass der Fahrer des vorausfahrenden Fahrzeugs 16 durch das durch die Frontscheinwerfer 18 des zweiten Fahrzeugs 10 abgestrahlte Licht geblendet wird. Die zulässige Blendungsgrenze 23 ist so gewählt, dass die Blendungsgrenze 22 der von den Frontscheinwerfern 18 des zweiten Fahrzeugs 10 unterhalb der Position des Kopfes des Fahrers des vorausfahrenden Fahrzeugs 16 bzw. der Positionen der Rückspiegel des vorausfahrenden Fahrzeugs 16 verläuft. Die für das vorausfahrende Fahrzeug 16 zulässige Blendungsgrenze 23 kann insbesondere auch abhängig vom Fahrzeugtyp des vorausfahrenden Fahrzeugs 16 ermittelt werden. Ferner kann die zulässige Blendungsgrenze 23 zum Beispiel durch gesetzliche Vorschriften vorgegeben sein. Im vorliegenden Ausführungsbeispiel wird zur Vereinfachung im Folgenden davon ausgegangen, dass die zulässige Blendungsgrenze 23 jeweils auf Höhe der Rückleuchten eines Fahrzeugs liegt. In der Praxis sind auch anderen Verläufe der zulässigen Blendungsgrenze 23 möglich.

Alternativ zur beschriebenen Möglichkeit, bei der die Steuereinheit 14 den Lichtsteuermodulen 17 eine gewünschte Lichtverteilung vorgibt, kann die Steuereinheit 14 die Lichtquellen und/oder Aktoren des mindestens einen Frontscheinwerfers 18 direkt ansteuern oder entsprechende Steuersignale zum Lichtsteuermodul 17 übertragen.

Das Erzeugen einer gewünschten Lichtverteilung und eine gewünschte Verschiebung der Blendungsgrenze 20 kann je nach Modell des Fahrzeugs 10 und je nach der verwendeten Technik der Frontscheinwerfer 18 auf unterschiedliche Art und Weise erfolgen. Insbesondere kann die Lichtverteilung durch das Drehen einer vor einer Lichtquelle angeordneten Blendenwelle, durch das Absenken eines Shutters, durch die Aktivierung einer Leuchtweitenregulierung, durch eine Leistungsänderung einer oder mehrerer Lichtquellen und/oder das Zu- bzw. Abschalten einer oder mehrerer Lichtquellen geändert bzw. die Blendungsgrenze 20 verschoben werden. Mit Hilfe der Blendenwelle können verschiedene Lichtfiguren erzeugt werden, die sowohl die unterschiedlichen Formen der Lichtverteilung als auch verschiedene horizontale Hell-Dunkel-Grenzen bzw. Blendungsgrenzen 20 repräsentieren. Solche Lichtfiguren sind beispielsweise aus der Schrift EP 0935728 B1 bekannt. Dabei kann zur Erzeugung von Lichtfiguren insbesondere die VARIOX-Technologie der Anmelderin verwendet werden. VARIOX ist eine eingetragene Marke der Anmelderin.

Um zum einen eine Blendung anderer Verkehrsteilnehmer zu vermeiden und zum anderen aber auch den vor dem zweiten Fahrzeug 10 liegenden Raum optimal auszuleuchten, ist es wichtig die genaue Lichtverteilung des von den Frontscheinwerfern des zweiten Fahrzeugs 10 abgestrahlten Lichts und somit auch die genaue Form und Lage des Blendbereichs 22 zu kennen und entsprechend bei der Steuerung der Frontscheinwerfer 18 des zweiten Fahrzeugs 10 zu berücksichtigen. Insbesondere ist es wichtig, die Lichtverteilung für die unterschiedlichen Stellungen der Blendenwalze zu kennen.

In Figur 2 ist ein Diagramm mit einer Lichtverteilung des durch die Frontscheinwerfer 18 des zweiten Fahrzeuges 10 abgestrahlten Lichts auf einer senkrechten Ebene bei aktiviertem Fernlicht dargestellt. Die senkrechte Ebene ist in der Entfernung der Rücklichter eines vorausfahrenden Fahrzeugs 16 angeordnet. Die durch die Frontscheinwerfer 18 des zweiten Fahrzeugs 10 hervorgerufene Lichtverteilung in dieser Entfernung kann aus einer in einer Referenzentfernung vermessenen Lichtverteilung ermittelt werden. Elemente mit gleichem Aufbau oder gleicher Funktion haben dieselben Bezugszeichen. In dem dunkel gefärbten Bereich in der Mitte des Diagramms ist die durch die Frontscheinwerfer 18 des Fahrzeugs 10 in der Ebene bewirkten Helligkeit am größten. Mit zunehmendem Abstand zur Mitte sinkt die Helligkeit des von den Frontscheinwerfern 18 abgestrahlten Lichts. Im Diagramm sind mehrere Isoluxlinien eingezeichnet, von denen die Innerste mit dem Bezugszeichen 26 bezeichnet ist. Diese Isoluxlinien sind Linien gleicher Helligkeit, so dass die Helligkeit entlang einer solchen Isoluxlinie in der betrachteten senkrechten Ebene konstant ist. Je näher die Isoluxlinien beieinander liegen, umso größer ist die Helligkeitsänderung in diesem Bereich.

Der Blendbereich 22 wird in diesem Ausführungsbeispiel durch die Isoluxlinie 28 begrenzt. Vorteilhafterweise wird als begrenzende Isoluxlinie die Isoluxlinie mit dem Wert 0,1 Lux gewählt, da davon ausgegangen wird, dass bei einer Helligkeit von kleiner 0,1 Lux keine Blendung anderer Verkehrsteilnehmer zu erwarten ist. Das vorausfahrende Fahrzeug 16 befindet sich innerhalb des Blendbereichs 22, so dass Fahrer des vorausfahrenden Fahrzeugs 16 durch das von den Frontscheinwerfern 18 des zweiten Fahrzeugs 10 abgestrahlte Licht geblendet wird und somit die Verkehrsicherheit gefährdet sein kann.

In Figur 3 ist ein Diagramm mit einer Lichtverteilung des durch die Frontscheinwerfer 18 des zweiten Fahrzeuges 10 abgestrahlten Lichts auf einer senkrechten Ebene bei reduzierter Lichtabstrahlung der Frontscheinwerfer 18 des zweiten Fahrzeugs 10 dargestellt. Die senkrechte Ebene ist vor dem Fahrzeug 10 in der Entfernung der Rücklichter des vorausfahrenden Fahrzeugs 16 angeordnet. Im Vergleich zu der in Figur 2 dargestellten Verkehrssituation ist durch eine entsprechende Ansteuerung des Frontscheinwerfers 18 des zweiten Fahrzeugs 10 eine Lichtverteilung des von den Frontscheinwerfern 18 abgestrahlten Lichts, beispielsweise durch eine entsprechende Einstellung einer Blendenwalze, erzeugt worden, bei der der Blendbereich 22 deutlich tiefer ausgebildet ist als in Figur 2 und somit eine Blendung des Fahrers des vorausfahrenden Fahrzeugs 16 und eine eventuelle Gefährdung der Verkehrssicherheit vermieden werden. Der Blendbereich 22 ist in diesem Ausführungsbeispiel durch die die Blendungsgrenze bildende Isoluxlinie 30 begrenzt.

In Figur 4 ist ein Diagramm mit einer Lichtverteilung des durch die Frontscheinwerfer 18 des zweiten Fahrzeuges 10 abgestrahlten Lichts auf einer senkrechten Ebene dargestellt. Die senkrechte Ebene ist in der Entfernung der Frontscheinwerfer eines entgegenkommenden Fahrzeugs 32 angeordnet. Die in Figur 4 dargestellte Lichtverteilung entspricht der Lichtverteilung nach Figur 2. Das entgegenkommende Fahrzeug 32 in Figur 4 hat die gleiche Entfernung zum zweiten Fahrzeug 10 wie das vorausfahrende Fahrzeug 16 zum zweiten Fahrzeug 10 in Figur 2. Trotzdem wird der Fahrer des entgegenkommenden Fahrzeugs 32 nicht von dem durch die Frontscheinwerfer 18 des zweiten Fahrzeugs 10 abgestrahlten Lichts geblendet, da die Grenze 28 des Blendbereiches 22 mittig vor dem zweiten Fahrzeug 10, also zur Mitte der Fahrspur, auf der sich das zweite Fahrzeug 10 befindet, hin ansteigt und zu den Seiten hin stark abfällt. Dadurch befindet sich das auf der Gegenfahrbahn entgegenkommende Fahrzeug 32 nicht im Blendbereich 22. Durch die Kenntnis der genauen Lichtverteilung des von den Frontscheinwerfern 18 des zweiten Fahrzeugs 10 abgestrahlten Lichts und durch die Kenntnis der Position des entgegenkommenden Fahrzeugs 32 ist eine bessere Ausleuchtung des Bereichs vor dem zweiten Fahrzeug 10 möglich, ohne dass das entgegenkommende Fahrzeug 32 geblendet wird. Die Position des entgegenkommenden Fahrzeugs 32 kann beispielweise mit Hilfe eines Bildverarbeitungsprogramms zur Bestimmung der Entfernung zum Fahrzeug 32 oder zur Bestimmung der Position des Fahrzeugs 32 bei der Verarbeitung mindestens eines von der Kamera 12 aufgenommen Bildes bzw. Bildpaar ermittelt werden.

In Figur 5 ist eine Seitenansicht einer schematisch dargestellten Verkehrssituation mit drei Fahrzeugen 10, 34, 36 gezeigt. Das an letzter Position fahrende Fahrzeug 10 hat ein System zur veränderlichen Einstellung der Lichtverteilung. Die beiden vorausfahrenden Fahrzeuge 34, 36 sind bei der in Figur 5 dargestellten Verkehrssituation für die Auswahl bzw. für die Einstellung einer blendungsfreien Lichtverteilung des durch die Frontscheinwerfer 18 des an letzter Position fahrenden Fahrzeugs 10 abgestrahlten Lichts gleichermaßen relevant. Die Blendungsgrenze 20 des Blendbereichs 22 verläuft nicht linear sondern hat einen gekrümmten Verlauf. Dieser gekrümmte Verlauf der Blendungsgrenze 20 hat bei der Auswahl der optimalen Lichtverteilung des von den Frontscheinwerfern 18 des Fahrzeugs 10 ausgestrahlten Lichtes einen Einfluss auf die Ermittlung der für die Auswahl der optimalen Lichtverteilung relevanten Objekte, wie die vorausfahrenden Fahrzeuge 34, 36. Dies ist insbesondere dann der Fall, wenn die Fahrzeug 10, 34, 36 auf einer gekrümmten Fahrbahn 21 fahren.

Bei der Ermittlung der für die Auswahl der optimalen Lichtverteilung relevanten Objekte werden diejenigen Fahrzeuge als relevant eingestuft, bei denen die Blendungsgrenze 20 auf Höhe der Rückleuchten des Fahrzeuges oder oberhalb der Rückleuchten und somit auf Höhe der, diesem Ausführungsbeispiel zu Grunde gelegten, zulässigen Blendungsgrenze bzw. oberhalb der zulässigen Blendungsgrenze auf das Fahrzeug trifft. Verläuft die Blendungsgrenze 20 unterhalb der Rückleuchten eines Fahrzeuges besteht keine Gefahr, dass der Fahrer dieses Fahrzeuges geblendet wird, sodass ein solches Fahrzeug als irrelevant klassifiziert wird. Die Detektion der Fahrzeuge 34, 36 und die Klassifizierung der detektierten Fahrzeuge 34, 36 in relevante und nicht relevante Objekte kann beispielweise mit Hilfe von entsprechenden Bildverarbeitungsprogrammen bei der Verarbeitung der Bilddaten der von der Kamera 12 des Fahrzeugs 10 aufgenommen Bildern erfolgen. Die Strichlinien 38 und 40 zeigen die Sichtlinien der Kamera 12 des Fahrzeug 10 zu den Rückleuchten 42, 44 der Fahrzeuge 34, 36. Da im Ausführungsbeispiel in Figur 5 die Blendungsgrenze 20 auf die Rückleuchten 42, 44 beider Fahrzeuge 34, 36, und somit auf die zulässigen Blendungsgrenzen, trifft, werden beide Fahrzeuge 34, 36 als relevante Objekte klassifiziert und entsprechend bei der Wahl der optimalen Lichtverteilung des von den Frontscheinwerfern 18 des Fahrzeugs 10 abgestrahlten Lichts berücksichtigt.

Figur 6 zeigt eine Seitenansicht einer schematisch dargestellten Verkehrssituation mit drei Fahrzeugen 10, 34, 36, wobei das an letzter Position fahrende Fahrzeug 10 ein System zur veränderlichen Einstellung der Lichtverteilung hat. Bei der in Figur 6 dargestellten Verkehrssituation ist nur das in Fahrtrichtung P1 hintere Fahrzeug 34 der beiden vorausfahrenden Fahrzeuge 34, 36 für die Auswahl bzw. Einstellung einer blendungsfreien Lichtverteilung des durch die Frontscheinwerfer 18 des an letzter Position fahrenden Fahrzeugs 10 abgestrahlten Lichts relevant. Anders als in Figur 5 trifft beim Ausführungsbeispiel nach Figur 6 die Blendungsgrenze 20 auf das in Fahrtrichtung P1 hintere Fahrzeug 34 auf der Höhe der Rückleuchten 42 des hinteren Fahrzeugs 34. Die Blendungsgrenze 20 trifft auf das in Fahrrichtung P1 vordere vorausfahrende Fahrzeug 36 unterhalb der Rückleuchten 44 des vorderen vorausfahrenden Fahrzeugs 36, so dass nur das in Fahrtrichtung P1 gesehen hintere Fahrzeug 34 als relevantes Objekt klassifiziert wird und bei der Auswahl bzw. der Einstellung der optimalen Lichtverteilung des von den Frontscheinwerfern 18 des Fahrzeugs 10 abgestrahlten Lichts entsprechend berücksichtigt wird.

Figur 7 zeigt eine Seitenansicht einer schematisch dargestellten Verkehrssituation mit drei Fahrzeugen 10, 34, 36, wobei das an letzter Position fahrende Fahrzeug 10 ein System zur veränderlichen Einstellung der Lichtverteilung hat. Das in Fahrtrichtung P1 vordere Fahrzeug 36 der beiden vorausfahrenden Fahrzeuge 34, 36 ist für die Auswahl bzw. Einstellung einer blendungsfreien Lichtverteilung des durch die Frontscheinwerfer 18 des an letzter Position fahrenden Fahrzeugs 10 abgestrahlten Lichts relevant. Anders als in Figur 6 trifft im Ausführungsbeispiel von Figur 7 die Blendungsgrenze 20 auf das in Fahrtrichtung P1 vordere vorausfahrende Fahrzeug 36 auf Höhe der Rückleuchten 44 des vorderen vorausfahrenden Fahrzeugs 34, und auf das in Fahrrichtung P1 hintere vorausfahrende Fahrzeug unterhalb der Rückleuchten 42 des hinteren vorausfahrenden Fahrzeugs 34, so dass nur das in Fahrtrichtung P1 gesehen vordere vorausfahrende Fahrzeug 36 als relevantes Objekt klassifiziert wird und bei der Auswahl bzw. der Einstellung der optimalen Lichtverteilung des von den Frontscheinwerfern 18 des Fahrzeugs 10 abgestrahlten Lichts entsprechend berücksichtigt wird.

Obwohl das in Fahrtrichtung P1 vordere vorausfahrende Fahrzeug 36 deutlich weiter vom letzten Fahrzeug 10 entfernt ist als das in Fahrtrichtung P1 hintere vorausfahrende Fahrzeug 34, ist das vordere vorausfahrende Fahrzeug 36 für die Wahl einer blendungsfreien Lichtverteilung des durch die Frontscheinwerfer 18 des an letzter Position fahrenden Fahrzeugs 10 abgestrahlten Lichts relevant. Dabei kann die Entfernung zwischen den beiden vorausfahrenden Fahrzeugen 34, 36 mehrere hundert Meter betragen. Würde also, beispielweise durch eine unzureichende Kenntnis der Lichtverteilung des durch die Frontscheinwerfer 18 des letzten Fahrzeugs 10 abgestrahlten Lichts, das in Fahrtrichtung P1 hintere vorausfahrende Fahrzeug 34 als relevant klassifiziert und die Lichtverteilung entsprechend angesteuert, so würde der Bereich vor dem Fahrzeug 10 nicht optimal, d. h. geringer als möglich, ausgeleuchtet werden. Die Sichtweite des Fahrzeugführers des Fahrzeugs 10 würde unnötig reduziert sein.

## Patentansprüche

1. Verfahren zum Ermitteln einer geeigneten Lichtverteilung des durch mindestens einen Frontscheinwerfer eines Fahrzeugs abgestrahlten Lichts,
bei dem die Position mindestens eines bei der Lichtverteilung des von dem mindestens einen Frontscheinwerfer (18) abgestrahlten Lichts zu berücksichtigenden Objekts (16, 32, 34, 36) im Bereich vor dem Fahrzeug (10) ermittelt wird,
**dadurch gekennzeichnet, dass** jeweils ein dreidimensionaler Verlauf der Blendungsgrenze (20, 28, 30) für mindestens zwei voneinander verschiedene einstellbare Lichtverteilungen des mindestens einen Frontscheinwerfers (18) ermittelt wird,
dass die Position des Objekts (16, 32, 34, 36) als dreidimensionale Position ermittelt wird
und dass überprüft wird, ob die für diese Lichtverteilung ermittelte Blendungsgrenze (20, 28, 30) eine zulässige Lage zur ermittelten Position des Objekts (16, 32, 34, 36) hat.

2. Verfahren nach Anspruch 1, **dadurch gekennzeichnet, dass** die Lichtverteilung aus den einstellbaren Lichtverteilungen ausgewählt wird, bei der bei einer größtmöglichen Ausleuchtung die für diese Lichtverteilung ermittelte Blendungsgrenze (20, 28, 30) eine zulässige Lage zur ermittelten Position des Objekts (16, 32, 34, 36) hat.

3. Verfahren nach Anspruch 1 oder 2, **dadurch gekennzeichnet, dass** die Position des Objekts (16, 32, 34, 36) relativ zur Blendungsgrenze (20, 28, 30) mindestens einer der einstellbaren Lichtverteilungen ermittelt wird.

4. Verfahren nach einem der vorhergehenden Ansprüche, **dadurch gekennzeichnet, dass** für jede mit Hilfe des Frontscheinwerfers (18) einstellbare Lichtverteilung ein Verlauf der Blendungsgrenze (20, 28, 30) ermittelt wird.

5. Verfahren nach einem der vorhergehenden Ansprüche, **dadurch gekennzeichnet, dass** eine Isoluxlinie (20, 28, 30) als Blendungsgrenze verwendet wird.

6. Verfahren nach einem der vorhergehenden Ansprüche, **dadurch gekennzeichnet, dass** die Lichtverteilung des durch die Frontscheinwerfer (18) des Fahrzeugs (10) abgestrahlten Lichts durch das Drehen einer vor einer Lichtquelle angeordneten Blendenwelle, durch das Absenken einer Blende, durch die Aktivierung einer Leuchtweitenregulierung, durch eine Leistungsänderung einer oder mehrerer Lichtquelle und/oder das Zu- bzw. Abschalten einer oder mehrerer Lichtquellen geändert bzw. verschoben wird.

7. Verfahren nach einem der vorhergehenden Ansprüche, **dadurch gekennzeichnet, dass** die sich im Bereich vor dem Fahrzeug (10) befindenden Objekte (16, 32, 34, 36) in für die Lichtverteilung relevante und für die Lichtverteilung nicht relevante Objekte klassifiziert werden, wobei solche Objekte (16, 32, 34, 36) als für die Lichtverteilung relevante Objekte klassifiziert werden, bei denen die Gefahr einer Blendung durch das durch die Frontscheinwerfer (18) des Fahrzeugs (10) abgestrahlte Licht besteht.

8. Verfahren nach Anspruch 7, **dadurch gekennzeichnet, dass** nur als relevant klassifizierte Objekte bei der Steuerung der Lichtverteilung berücksichtigt werden.

9. Verfahren nach einem der vorhergehenden Ansprüche, **dadurch gekennzeichnet, dass** mit Hilfe einer Bilderfassungseinheit (12) mindestens ein Bild mit Abbildungen von in einem Bereich vor dem Fahrzeug (10) vorhandenen Objekten erfasst wird und dem Bild entsprechende Bilddaten erzeugt und verarbeitet werden, wobei die sich im Bereich vor dem Fahrzeug (10) befindenden für die Lichtverteilung relevanten Objekte (16, 32, 34, 36) detektiert und klassifiziert werden.

10. Verfahren nach einem der vorhergehenden Ansprüche, **dadurch gekennzeichnet, dass** solche Fahrzeuge (16, 32, 34, 36) als relevante Objekte klassifiziert werden, bei denen die Blendungsgrenze (20) des Blendbereichs (22) auf Höhe einer zulässigen Blendungsgrenze (23), die die maximale Höhe angibt, in der die Blendungsgrenze (20) auf das zu klassifizierende Fahrzeug (16, 32, 34, 36) treffen darf, ohne dass der Fahrer des zu klassifizierende Fahrzeug (16, 32, 34, 36) durch das durch die Frontscheinwerfer (18) des Fahrzeugs (10) abgestrahlte Licht geblendet wird, oder oberhalb einer zulässigen Blendungsgrenze (23) auf das zu klassifizierende Fahrzeug (16, 32, 34, 36) trifft.

11. Vorrichtungen zum Ermitteln einer geeigneten Lichtverteilung des durch mindestens einen Frontscheinwerfer eines Fahrzeugs abgestrahlten Lichts,
mit einer Bilderfassungseinheit (12), die mindestens ein Bild mit Abbildungen von in einem Bereich vor dem Fahrzeug (10) vorhandenen Objekten erfasst wird und dem Bild entsprechende Bilddaten erzeugt,
mit einer Verarbeitungseinheit (14),
die sich im Bereich vor dem Fahrzeug (10) befindenden für die Lichtverteilung relevanten Objekte (16 ,32, 34, 36) detektiert und klassifiziert,
die Position mindestens eines bei der Lichtverteilung des von dem mindestens einen Frontscheinwerfer (18) abgestrahlten Lichts zu berücksichtigenden Objekts (16, 32, 34, 36) im Bereich vor dem Fahrzeug (10) ermittelt,
**dadurch gekennzeichnet, dass** die Verarbeitungseinheit (14)
jeweils einen dreidimensionalen Verlauf der Blendungsgrenze (20, 28, 30) für mindestens zwei voneinander verschiedene erstellbare Lichtverteilungen des mindestens einen Frontscheinwerfers ermittelt,
die Position des Objekts (16, 32, 34, 36) als dreidimensinale Position ermittelt, und
überprüft, ob die für die Lichtverteilung ermittelte Blendungsgrenze (20, 28, 30) eine zulässige Lage zur ermittelten Position des Objekts (16, 32, 34, 36) hat.

## Claims

1. Method for determining an appropriate light distribution of the light emitted by at least one headlamp of a vehicle;
wherein the position of at least one object (16, 32, 34, 36) to be taken into consideration for light distribution of the light emitted by the at least one headlamp (18) is determined in the area in front of the vehicle (10);
**characterized in that** a three-dimensional course of the glare boundary (20, 28, 30) for at least two light distributions that are adjustable differently from each other of the at least one headlamp (18) is respectively determined;
the position of the object (16, 32, 34, 36) as three-dimensional position is determined; and
it is checked if the glare boundary (20, 28, 30) determined for this light distribution has a permissible position in relation to the determined position of the object (16, 32, 34, 36).

2. Method according to claim 1, **characterized in that** the light distribution is selected from the adjustable light distributions at which at a maximum illumination the glare boundary (20, 28, 30) determined for this light distribution has a permissible position in relation to the determined position of the object (16, 32, 34, 36).

3. Method according to claim 1 or 2, **characterized in that** the position of the object (16, 32, 34, 36) relative to the glare boundary (20, 28, 30) of at least one of the adjustable light distributions is determined.

4. Method according to one of the preceding claims, **characterized in that** for each light distribution adjustable by means of the headlamp (18) a course of the glare boundary (20, 28, 30) is determined.

5. Method according to one of the preceding claims, **characterized in that** an isolux line (20, 28, 30) is used as glare boundary.

6. Method according to one of the preceding claims, **characterized in that** the light distribution of the light emitted by the headlamps (18) of the vehicle (10) is modified or shifted by rotating a shutter shaft arranged in front of a light source, by lowering a shutter, by activating a headlamp range adjustment, by a change in performance of one or several light sources and/or by connecting or disconnecting one or several light sources.

7. Method according to one of the preceding claims, **characterized in that** the objects (16, 32, 34, 36) located in the area in front of the vehicle (10) are classified in objects relevant for the light distribution and in objects not relevant for the light distribution, wherein such objects (16, 32, 34, 36) are classified as relevant for the light distribution that have a risk of glare by means of the light emitted by the headlamps (18) of the vehicle (10).

8. Method according to claim 7, **characterized in that** when controlling the light distribution only objects classified as relevant are taken into consideration.

9. Method according to one of the preceding claims, **characterized in that** by means of an image capturing unit (12) at least one image with pictures of objects present in an area in front of the vehicle (10) is captured and image data corresponding to the image are generated and processed, wherein the objects (16, 32, 34, 36) located in front of the vehicle (10) that are relevant for the light distribution are detected and classified.

10. Method according to one of the preceding claims, **characterized in that** such vehicles (16, 32, 34, 36) are classified as relevant objects in which the glare boundary (20) of the glare area (22) at the level of a permissible glare boundary (23) indicating the maximum height in which the glare boundary (20) is allowed to fall onto the vehicle to be classified (16, 32, 34, 36) without blinding the driver of the vehicle to be classified (16, 32, 34, 36) by the light emitted by the headlamps (18) of the vehicle (10), or beyond a permissible glare boundary (23) falls onto the vehicle to be classified (16, 32, 34, 36).

11. Devices for determining an appropriate light distribution of light emitted by at least one headlamp of a vehicle;
comprising an image capturing unit (12) that captures at least one image with pictures of objects located in an area in front of the vehicle (10) and generates image data corresponding to the image;
comprising a processing unit (14);
that detects and classifies the objects (16, 32, 34, 36) relevant for the light distribution located in the area in front of the vehicle (10);
that determines the position of at least one object (16, 32, 34, 36) to be taken into consideration during the light distribution of the light emitted by the at least one headlamp (18) in the area in front of the vehicle (10);
**characterized in that** the processing unit (14)
determines in each case a three-dimensional course of the glare boundary (20, 28, 30) for at least two light distributions that can be adjusted differently from each other of the at least one headlamp (18);
determines the position of the object (16, 32, 34, 36) as three-dimensional position; and
checks if the glare boundary (20, 28, 30) determined for the light distribution has a permissible position with relation to the determined position of the object (16, 32, 34, 36).

## Revendications

1. Procédé de détermination d'une distribution lumineuse appropriée de la lumière émise par au moins un phare avant d'un véhicule,
dans lequel la position d'au moins un objet (16, 32, 34, 36), à prendre en considération lors de la distribution lumineuse de la lumière émise par l'au moins un phare (18), est déterminée dans la région située en avant du véhicule (10),
**caractérisé en ce que** l'on détermine une allure tridimensionnelle de la limite d'éblouissement (20, 28, 30) pour au moins deux distributions lumineuses réglables différentes l'une de l'autre de l'au moins un phare avant (18),
**en ce que** la position de l'objet (16, 32, 34, 36) est déterminée comme position tridimensionnelle
**en ce que** l'on vérifie si la limite d'éblouissement (20, 28, 30) déterminée pour cette distribution lumineuse a une position admissible par rapport à la position déterminée de l'objet (16, 32, 33, 36).

2. Procédé selon la revendication 1, **caractérisé en ce que** la distribution lumineuse est choisie parmi les distributions lumineuses réglables, la limite d'éblouissement (20, 28, 30) déterminée pour cette distribution lumineuse ayant une position admissible par rapport à la position déterminée de l'objet (16, 32, 34, 36) pour un éclairement le plus grand possible.

3. Procédé selon la revendication 1 ou 2, **caractérisé en ce que** la position de l'objet (16, 32, 34, 36) est déterminée par rapport à la limite d'éblouissement (20, 28, 30) d'au moins une des distributions lumineuses réglables.

4. Procédé selon l'une des revendications précédentes, **caractérisé en ce que** pour chaque distribution lumineuse réglable à l'aide du phare avant (18) on détermine une allure de la limite d'éblouissement (20, 28, 30).

5. Procédé selon l'une des revendications précédentes, **caractérisé en ce qu'**une ligne isoéclairement (20, 28, 30) est utilisée comme limite d'éblouissement.

6. Procédé selon l'une des revendications précédentes, **caractérisé en ce que** la distribution lumineuse de la lumière émise par le phare avant (18) du véhicule (10) est modifiée ou déplacée en faisant tourner un arbre de diaphragme disposé en avant d'une source lumineuse, en abaissant un diaphragme, en activant une régulation de l'intensité d'éclairement, en modifiant la puissance d'une ou plusieurs sources lumineuses et/ou en connectant ou déconnectant une ou plusieurs sources lumineuses.

7. Procédé selon l'une des revendications précédentes, **caractérisé en ce que** les objets (16, 32, 34, 36), se trouvant dans la région en avant du véhicule (10), sont classés en objets pertinents pour la distribution lumineuse et en objets non pertinents pour la distribution lumineuse, de tels objets (16, 32, 34, 36) étant classés en objets pertinents pour la distribution lumineuse pour lesquels il y a le risque d'un éblouissement par la lumière émise par le phare avant (18) du véhicule (10).

8. Procédé selon la revendication 7, **caractérisé en ce que** l'on ne prend en considération que des objets classés comme pertinents lors de la commande de la distribution lumineuse.

9. Procédé selon l'une des revendications précédentes, **caractérisé en ce que**, à l'aide d'une unité de détection d'images (12), on détecte au moins une image comportant des représentations d'objets présents dans une région située en avant du véhicule (10) et on génère et on traite des données d'image correspondant à l'image, les objets (16, 32, 34, 36), pertinents pour la distribution lumineuse et se trouvant dans la région située en avant du véhicule (10), étant détectés et classés.

10. Procédé selon l'une des revendications précédentes, **caractérisé en ce que** de tels véhicules (16, 32, 34, 36) sont classés comme objets pertinents, pour lesquels la limite d'éblouissement (20) de la région de diaphragme (22), arrive à hauteur d'une limite d'éblouissement admissible (23) ou au-dessus d'une limite d'éblouissement admissible (23), laquelle limite d'éblouissement admissible indique la hauteur maximale à laquelle la limite d'éblouissement (20) peut atteindre le véhicule (16, 32, 34, 36) à classer sans que le conducteur du véhicule (16, 32, 31, 36) à classer soit ébloui par la lumière émise par les phares avant (18) du véhicule (10) .

11. Dispositif pour déterminer une distribution lumineuse appropriée de la lumière émise par au moins un phare avant d'un véhicule, ledit dispositifs comportant
une unité de détection d'image (12) qui détecte au moins une image comportant des représentations d'objets présents dans une région située en avant du véhicule (10) et qui génère des données d'image correspondant à l'image,
une unité de traitement (14),
qui détecte et classe des objets (16, 32, 34, 36) pertinents pour la distribution lumineuse et se trouvant dans la région située en avant du véhicule (10),
et détermine la position d'au moins un objet (16, 32, 34, 36), à prendre en considération lors de la distribution lumineuse de la lumière émise par l'au moins un phare avant (18), dans la région située en avant du véhicule (10),
**caractérisé en ce que** l'unité de traitement (14) détermine à chaque fois une allure tridimensionnelle de la limite d'éblouissement (20, 28, 30) pour au moins deux distributions lumineuses réglables différentes l'une de l'autre de l'au moins un phare avant,
détermine la position de l'objet (16, 32, 34, 36) comme une position tridimensionnelle, et
vérifie si la limite d'éblouissement (20, 28, 30) déterminée pour la distribution lumineuse a une position admissible par rapport à la position déterminée de l'objet (16, 32, 31, 36).
